# EUROPÄISCHE PATENTSCHRIFT

(11) **EP 1 770 375 B1**
(45) Veröffentlichungstag und Bekanntmachung des Hinweises auf die Patenterteilung: **28.12.2016**
(21) Anmeldenummer: 06015000.0
(22) Anmeldetag: 19.07.2006
(51) Int. Cl.: G01D 5/347, G01D 5/245, G01D 5/249

(54) **Positionsmesseinrichtung mit zwei Massverkörperungen deren Codespuren sich gegenseitig überlappen**
Position measuring device with two scales whose coded tracks overlap one another
Dispositif de mesure de position comprenant deux echelles de mesure dont les pistes codées se chevauchent mutuellement

(30) Priorität: 01.10.2005 DE 102005047259
(43) Veröffentlichungstag der Anmeldung: 04.04.2007
(73) Patentinhaber: Dr. Johannes Heidenhain GmbH, 83301 Traunreut (DE)
(72) Erfinder: Strasser, Erich, 83308 Trostberg (DE)

(56) Entgegenhaltungen:
- DE-A1- 3 640 156
- DE-A1- 19 855 960
- US-A- 4 199 749
- US-A- 4 631 519
- US-A- 4 712 088

## Beschreibung

Die Erfindung betrifft eine Positionsmesseinrichtung zur Messung von Längen- und/oder Winkelpositionen nach dem Oberbegriff von Anspruch 1.

Positionsmesseinrichtungen sind aus einer Vielzahl von Druckschriften bekannt. Sie dienen der Messung von Längen oder Winkeln bei Maschinen und Einrichtungen. Derartige Positionsmesseinrichtungen bestehen im wesentlichen aus einer Maßverkörperung, auf der eine oder mehrere Codespuren aufgebracht sind, und einer Abtasteinheit, die die Codespuren abtastet und Weg- bzw. Winkeländerungen in elektrische Signale umwandelt. Im Falle eines Winkelmessgeräts kann es sich bei der Maßverkörperung beispielsweise um eine Codescheibe handeln, auf der die Codespuren konzentrisch angeordnet sind. Bei Längenmessgeräten ist die Maßverkörperung bevorzugt als Maßstab ausgebildet.

Weiter sind Positionsmesseinrichtungen, insbesondere Winkelmessgeräte, bekannt, die neben der Codescheibe zur Erfassung des Drehwinkels einer Welle noch weitere Codescheiben enthalten, mit denen die Anzahl der absolvierten Umdrehungen erfasst wird. Dazu werden diese zusätzlichen Codescheiben über ein Untersetzungsgetriebe angetrieben, das die Drehzahl der Welle in geeigneter Weise reduziert. Derartige Winkelmessgeräte werden auch als Multiturn-Drehgeber bezeichnet.

Ebenso sind Längenmessgeräte bekannt, deren Maßstab in mehrere, aufeinander folgende Positionsabschnitte unterteilt ist, in denen sich die Codierung der Codespuren in Messrichtung zyklisch wiederholt. Zur Zählung der zurückgelegten Positionsabschnitte sind eine oder mehrere Codescheiben vorgesehen, die beim Abtasten des Maßstabs, analog zum Multiturn-Drehgeber, über ein Untersetzungsgetriebe angetrieben werden.

Um den Forderungen nach einer möglichst einfachen und kompakten Bauweise eines Multiturn-Drehgebers nachkommen zu können, ist es notwendig, die Abtastbereiche der Codespuren der verschiedenen Maßverkörperungen auf kleinem Raum zusammenzuführen. Dadurch können mehrere, oder sogar alle Codespuren an einer Stelle, im Idealfall sogar mit nur einem Sensorbaustein, einem so genannten Opto-ASIC, abgetastet werden.

So beschreiben die JP11132792A2 und die JP63237616A2 absolute Multiturn-Drehgeber mit je einer Codescheibe zur Ermittlung der Winkelposition einer Welle, sowie einer weiteren Codescheibe zur Zählung der absolvierten Umdrehungen der Welle. Die beiden Codescheiben sind über ein Untersetzungsgetriebe verbunden und ihre Codespuren werden je an nur einer Stelle abgetastet. Nachteil dieser Anordnungen ist es, dass jeweils nur eine Codescheibe zur Zählung der Umdrehungen vorgesehen ist, wodurch die Anzahl der zählbaren Umdrehungen eingeschränkt ist.

Die US-A-4712088, US-A-4199749 und die DE3640156A1 zeigen Absolutkodierer, in welchen zwei überlagerte Codespuren mit einer Abtasteinheit abgetastet werden. Durch die Überlagerung der Codespuren entsteht ein neuer Code, der abgetastet wird. Die in den einzelnen Codespuren enthaltene Positionsinformation wird dabei nicht abgetastet.

Die EP1457762A1 beschreibt eine Vorrichtung zur Messung der Postition, des Weges oder des Drehwinkels eines Objektes. Sie enthält drei Maßverkörperungen in Form von drei aufeinander folgenden Codescheiben, die über ein Differenzzahngetriebe gekuppelt sind. Die Abtastung der Codescheiben erfolgt durch eine die Codespuren sämtlicher Codescheiben radial überdeckende Abtasteinheit. Nachteilig an einer Vorrichtung dieser Art ist es, dass für die Abtastung der äußersten Codespur alle Codescheiben von der Beleuchtungseinheit durchstrahlt werden müssen. Daraus resultiert eine höhere Anfälligkeit gegenüber Verschmutzungen.

Es ist daher Aufgabe der Erfindung, eine Positionsmesseinrichtung mit einer gegenüber dem Stand der Technik verbesserten Anordnung der Maßverkörperungen anzugeben.

Diese Aufgabe wird gelöst durch eine Positionsmesseinrichtung nach Anspruch 1. Vorteilhafte Details dieser Positionsmesseinrichtung ergeben sich aus den von Anspruch 1 abhängigen Ansprüchen.

Es wird nun eine Positionsmesseinrichtung zur Messung von Längen- und/oder Winkelpositionen vorgeschlagen, mit wenigstens zwei Maßverkörperungen, auf denen je wenigstens eine Codespur aufgebracht ist und einer Abtasteinheit zum Abtasten der Codespuren. Die wenigstens zwei Maßverkörperungen sind so zueinander angeordnet, dass sich wenigstens eine Codespur einer ersten Maßverkörperung und wenigstens eine Codespur einer zweiten Maßverkörperung zumindest teilweise überlappen und von der Abtasteinheit die Positionsinformation wenigstens einer der Codespuren im Bereich der Überlappung abtastbar ist.

In einer Ausführungsform ist die erste Maßverkörperung eine erste Codescheibe mit einer ersten Codespur, mit der die Winkelposition einer Welle messbar ist. Eine oder mehrere zweite Maßverkörperungen, beispielsweise in Form einer zweiten Codescheibe mit einer zweiten Codespur und einer dritten Codescheibe mit einer dritten Codespur, werden von der Welle über ein Untersetzungsgetriebe angetrieben, so dass aus ihrer Winkelposition die Anzahl der zurückgelegten Umdrehungen der Welle ermittelbar ist.

In einer weiteren Ausführungsform ist die erste Maßverkörperung ein Maßstab, mit einer ersten Codespur, die in Messrichtung aufeinander folgende, absolut codierte Codeabschnitte aufweist. Zweite Maßverkörperungen sind wiederum eine zweite Codescheibe mit einer zweiten Codespur und eine dritte Codescheibe mit einer dritten Codespur, die sich in einem Abtastkopf befinden, der in Messrichtung entlang des Maßstabes verfahrbar ist. Somit ist durch Abtastung der ersten Codespur die Position innerhalb des Codeabschnitts, an dem sich der Abtastkopf gerade befindet, messbar. Die zweite Codescheibe und die dritte Codescheibe werden über ein Untersetzungsgetriebe angetrieben, das so dimensioniert ist, dass aus ihrer Winkelposition die Anzahl der vom Abtastkopf passierten Codeabschnitte ermittelbar ist.

Besonders vorteilhaft ist es, wenn die sich überlappenden Codespuren eine Absolutcodierung in Form eines Pseudo-Random-Codes aufweisen. Das gilt insbesondere dann, wenn der Pseudo-Random-Code manchester-codiert ist, da in diesem Fall die Codesegmente zu 50% aus lichtdurchlässigen Bereichen bestehen und so ein hoher Restlichtanteil bei der Überlappung erreichbar ist.

Ein besonders hoher Restlichtanteil für überlappend abgetastete Codespuren ergibt sich, wenn die erste Maßverkörperung relativ zur zweiten Maßverkörperung so angeordnet ist, dass in Bereichen überlappender Abtastung die Codesegmente der überlappend abgetasteten Codespur eine möglichst große Anzahl von Codesegmenten der überlappenden Codespur schneiden.

Dadurch, dass die Bereiche, in denen die Abtastung der Codespuren erfolgt, bei einer erfindungsgemäßen Anordnung der Maßverkörperungen auf sehr kleiner Fläche nebeneinander angeordnet werden können, wird es möglich, mehrere, oder im Idealfall alle Codespuren mit einer einzigen Detektoreinheit abzutasten. Mit Vorteil wird zu diesem Zweck ein Opto-ASIC eingesetzt.

Weitere Vorteile sowie Einzelheiten der vorliegenden Erfindung ergeben sich aus der nachfolgenden Beschreibung bevorzugter Ausführungsformen anhand der Figuren. Dabei zeigt
Figur 1 eine schematische Darstellung einer ersten Ausführungsform einer erfindungsgemäßen Positionsmesseinrichtung in der Draufsicht,
Figur 2 die in Figur 1 dargestellte Ausführungsform in einer Seitenansicht,
Figur 3 ein Beispiel für eine besonders vorteilhafte Anordnung von Codescheiben mit überlappenden Codespuren und
Figur 4 eine schematische Darstellung eines weiteren Ausführungsbeispiels einer erfindungsgemäßen Positionsmesseinrichtung.

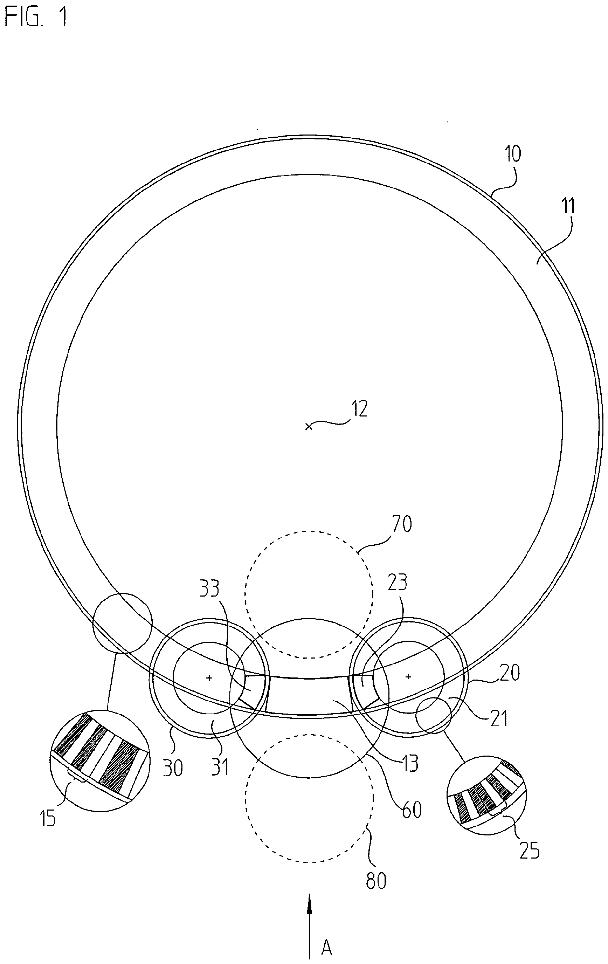

Figur 1 zeigt eine schematische Darstellung einer ersten Ausführungsform einer erfindungsgemäßen Positionsmesseinrichtung. Sie besteht aus einer ersten Maßverkörperung in Form einer ersten Codescheibe 10, die über eine Welle 12 angetrieben wird. Auf der ersten Codescheibe 10 ist, radial zum Mittelpunkt der Welle 12, eine erste Codespur 11 angeordnet, über die die Winkelposition der ersten Codescheibe 10 und damit auch der Welle 12 messbar ist. Eine zweite Codescheibe 20 mit einer zweiten Codespur 21 und eine dritte Codescheibe 30 mit einer dritten Codespur 31 sind so angeordnet, dass sich sowohl die zweite Codespur 21, als auch die dritte Codespur 31 mit der ersten Codespur 11 teilweise überlappen. Die zweite Codescheibe 20 und die dritte Codescheibe 30 sind zweite Maßverkörperungen.

Die zweite Codescheibe 20 und die dritte Codescheibe 30 sind um ihre Mittelpunkte drehbar gelagert. Sie können beispielsweise von der Welle 12 über ein Untersetzungsgetriebe so angetrieben werden, dass die zweite Codescheibe 20 die Anzahl der zurückgelegten Umdrehungen der ersten Codescheibe 10 und die dritte Codescheibe 30 die Anzahl der zurückgelegten Umdrehungen der zweiten Codescheibe 20 anzeigt. Sie können aber auch über ein Differenzzahngetriebe an die Welle 12 gekuppelt sein. In beiden Fällen ist die Anzahl der zurückgelegten Umdrehungen der Welle 12 durch Kombination der Winkelpositionen der zweiten Codescheibe 20 und der dritten Codescheibe 30 ermittelbar.

Aus Gründen der Übersichtlichkeit wurde in Figur 1 darauf verzichtet, eine Abtasteinheit darzustellen. Statt dessen ist der Bereich, in dem die Abtastung der Codespuren 11, 21, 31 stattfindet, durch einen Beleuchtungskreis 60 gekennzeichnet. Innerhalb des Beleuchtungskreises 60 ergibt sich für die Abtastung der ersten Codespur 11 ein erstes Abtastfenster 13, für die Abtastung der zweiten Codespur 21 ein zweites Abtastfenster 23 und für die Abtastung der dritten Codespur 31 ein drittes Abtastfenster 33. Wie aus der Darstellung ersichtlich, erfolgt die Abtastung der ersten Codespur im ersten Abtastfenster 13 ohne Überlappung, während die Abtastung im zweiten Abtastfenster 23 bzw. im dritten Abtastfenster 33 in Bereichen durchgeführt wird, in denen sich die zweite Codespur 21, bzw. die dritte Codespur 31 mit der ersten Codespur 11 überlappen. Somit handelt es sich bei der zweiten Codespur 21, sowie der dritten Codespur 31 um überlappend abgetastete Codespuren und bei der ersten Codespur 11 um eine überlappende Codespur. Das zweite Abtastfenster 23 und das dritte Abtastfenster 33 sind Bereiche überlappender Abtastung.

Um die Vorteile dieser Anordnung der Codescheiben weiter zu verdeutlichen, sind in gestrichelten Linien noch eine vierte Codescheibe 70 und eine fünfte Codescheibe 80 angedeutet. Durch die Platz sparende Anordnung der zweiten Codescheibe 20 und der dritten Codescheibe 30 ist es möglich, auch die vierte Codescheibe 70 und die fünfte Codescheibe 80 so zu platzieren, dass sie ebenfalls über Abtastfenster innerhalb des Beleuchtungskreises 60 abgetastet werden können. In anderen Worten ausgedrückt können auf engstem Raum, nämlich innerhalb des Beleuchtungskreises 60, alle Codespuren der fünf dargestellten Codescheiben 10, 20, 30, 70 und 80 abgetastet werden.

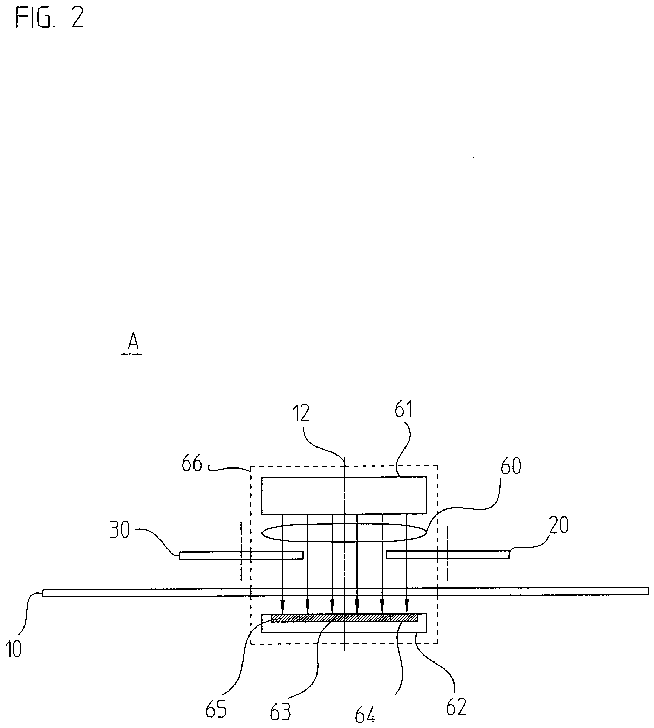

Figur 2 zeigt eine schematische Seitenansicht einer erfindungsgemäßen Positionsmessvorrichtung nach Figur 1 aus der durch den Pfeil A gekennzeichneten Richtung. Zusätzlich zu den in Figur 1 dargestellten Komponenten sind in Figur 2 eine Beleuchtungseinheit 61 und eine Detektoreinheit 62 für die Abtastung der Codespuren der ersten Codescheibe 10, der zweiten Codescheibe 20 und der dritten Codescheibe 30 dargestellt. Die Beleuchtungseinheit 61 und die Detektoreinheit 62 bilden somit eine Abtasteinheit 66. Bereits in Figur 1 beschriebene Bestandteile der Positionsmessvorrichtung sind in Figur 2 mit den gleichen Bezugszeichen versehen.

Bei dem dargestellten Abtastprinzip handelt es sich um eine sogenannte Durchlichtabtastung, d.h. die Codescheiben befinden sich zwischen der Beleuchtungseinheit 61 und der Detektoreinheit 62. Die Beleuchtungseinheit 61 sendet ein weitgehend paralleles Lichtbündel mit dem Durchmesser des Beleuchtungskreises 60 in Richtung der Codescheiben aus. Durch die Codespuren wird das Licht, je nachdem, ob es auf lichtdurchlässige oder lichtundurchlässige Codesegmente trifft, moduliert und trifft schließlich auf Sensorfelder 63, 64, 65 der Detektoreinheit 62, die das modulierte Licht in elektrische Positionssignale umwandeln und zur Weiterverarbeitung bereitstellen.

Wie aus Figur 2 ersichtlich, sind die zweite Codescheibe 20 und die dritte Codescheibe 30 zusammen in einer Messebene angeordnet, während sich die erste Codescheibe 10 auf einer dazu parallelen Messebene befindet. Diese Anordnung ist in der Praxis besonders günstig, da sie einen kleinen Abstand zwischen der Beleuchtungseinheit 61 und der Detektoreinheit 62 ermöglicht. Dadurch wird der Modulationsgrad der aus der Abtastung der Codespuren der zweiten Codescheibe 20 und der dritten Codescheibe 30 resultierenden Positionssignale nur unwesentlich beeinträchtigt. Zudem wird der Platzbedarf auch in dieser räumlichen Ausdehnung gesenkt.

Es sei an dieser Stelle ausdrücklich darauf hingewiesen, dass die Sensorfelder 63, 64, 65 nicht nur aus einzelnen Sensorelementen, sondern auch aus Gruppen von Sensoren, beispielsweise in Messrichtung hintereinander angeordnet, bestehen können. Anzahl und Anordnung der Sensorelemente ist abhängig von der vom Sensorfeld 63, 64, 65 auszuwertenden Codespur.

Besonders vorteilhaft ist es, wenn die Detektoreinheit 62 nicht aus vielen diskreten Bausteinen, wie z.B. einzelnen Photodioden oder Photodiodenarrays aufgebaut ist, sondern aus einem komplexen anwenderspezifischen Baustein besteht. Derartige Bausteine werden auch als Opto-ASICs bezeichnet. Sie enthalten meist neben den Photoelementen auch Schaltungen zur Aufbereitung der von den Photoelementen aus dem empfangenen modulierten Licht gewonnenen elektrischen Positionssignale. Häufig sind auch Schaltungen zur Interpolation der Positionssignale, zu deren Digitalisierung, sowie Schnittstellenmodule zur Übertragung der Positionsinformation zu einer Folgeelektronik usw. bereits mit integriert. Durch den Einsatz eines Opto-ASICs als Detektoreinheit 62 können im beschriebenen Ausführungsbeispiel die Codespuren 11, 21, 31 an nur einer Stelle abgetastet und ausgewertet werden. Darüber hinaus ermöglicht die erfindungsgemäße Anordnung der zweiten Codescheibe 20 und der dritten Codescheibe 30, dass die in Figur 1 angedeutete vierte Codescheibe 70 und auch die fünfte Codescheibe 80 so angeordnet werden können, dass auf ihnen befindliche Codespuren ebenfalls noch mit dem gleichen Opto-ASIC abgetastet werden können.

Im dargestellten Beispiel ist das erste Sensorfeld 63 der Detektoreinheit 62 dem ersten Abtastfenster 13 zugeordnet. Das Licht, das durch das erste Abtastfenster 13 fällt, wird lediglich von der ersten Codespur 11 der ersten Codescheibe 10 moduliert. Daher handelt es sich um eine nicht überlappende Abtastung. Das zweite Sensorfeld 64, das dem zweiten Abtastfenster 23 zugeordnet ist und das dritte Sensorfeld 65, das dem dritten Abtastfenster 33 zugeordnet ist, empfangen Licht, das sowohl von der zweiten Codespur 21 bzw. der dritten Codespur 31, als auch von der sie überlappenden ersten Codespur 11 moduliert wird.

In der Praxis muss darauf geachtet werden, dass die überlappend abgetasteten Codespuren 21, 31, durch die überlappende Codespur 11 nur soweit abgedeckt wird, dass zum Abtastzeitpunkt eine eindeutige Auswertung erfolgen kann. Das bedeutet, dass die lichtdurchlässigen Codesegmente der überlappend abgetasteten Codespuren 21, 31 im Abtastfenster zum Zeitpunkt einer Abtastung nur soweit von den lichtundurchlässigen Codesegmenten der überlappenden Codespur 11 abgedeckt werden dürfen, dass die Restlichtmenge eine eindeutige Auswertung erlaubt. Günstige Anordnungen ergeben sich, wenn die Codesegmente der überlappend abgetasteten Codespuren 21, 31 im Abtastfenster eine möglichst große Anzahl von Codesegmenten der überlappenden Codespur 11 schneiden.

Für die erste Codespur 11 der ersten Codescheibe 10, also die überlappende Codespur, ist es deshalb sehr vorteilhaft, wenn sie über den gesamten Umfang eine gleichmäßige Anordnung von lichtdurchlässigen und lichtundurchlässigen Codesegmenten aufweist. Das ist beispielsweise dann der Fall, wenn die überlappende Codespur 11 eine Inkrementalteilung, also ein regelmäßiges, radiales Strichmuster aufweist, bei dem die Winkelposition durch Zählung der den Detektor passierenden Striche bezogen auf eine Referenzmarke bestimmt wird.

Ebenfalls besonders für eine überlappende Codespur 11 geeignet sind sogenannte Pseudo-Random-Codes (PRC). PRC bestehen aus einer unregelmäßigen Abfolge von lichtdurchlässigen und lichtundurchlässigen Codesegmenten, die über den Umfang der Codespur so angeordnet sind, dass sich für jeden Winkelschritt ein anderes, eindeutiges serielles Codewort ergibt und so jederzeit die aktuelle Winkelposition festgestellt werden kann.

Um die statistische Häufigkeit des Auftretens von lichtdurchlässigen Codesegmenten zu optimieren, ist es besonders vorteilhaft, wenn der PRC zusätzlich eine Manchester-Codierung aufweist. Ist beim PRC einer logischen "1" ein lichtdurchlässiges Codesegment zugeordnet und einer logischen "0" ein lichtundurchlässiges, so wird durch die Manchester-Codierung eine logische "1" beispielsweise durch ein Codesegment dargestellt, das in Messrichtung aus einem lichtundurchlässigen Bereich, gefolgt von einem lichtdurchlässigen Bereich besteht. Analog dazu besteht dann eine logische "0" aus einem lichtdurchlässigen Bereich, gefolgt von einem lichtundurchlässigen. Daraus folgt, dass nun auch Bitfolgen, die bei einem PRC aus aneinander gereihten lichtundurchlässigen Codesegmenten bestehen würden (beispielsweise "000" bei der oben beschriebenen Zuordnung), zu 50% aus lichtdurchlässigen Bereichen bestehen.

In der Praxis sind auch kombinierte Codespuren bekannt, in denen beispielsweise neben einer absolut codierten Spur mit einem Pseudo-Random-Code mit Manchester-Codierung zusätzlich eine Inkrementalteilung angeordnet ist. Selbstverständlich sind auch derartige Codespuren im Rahmen der Erfindung einsetzbar.

In Figur 1 sind als Beispiel für Codespuren, bestehend aus einem PRC mit Manchester-Codierung, Ausschnitte der ersten Codespur 11 und der zweiten Codespur 21 vergrößert dargestellt. Zusätzlich sind beispielhaft ein Codesegment 15 der ersten Codespur 11, bzw. ein Codesegment 25 der zweiten Codespur 21 eingezeichnet.

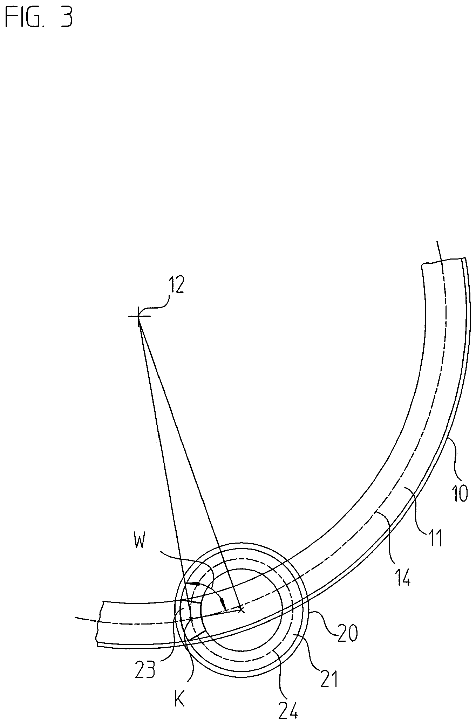

Figur 3 zeigt ein Beispiel einer besonders vorteilhaften Anordnung von zwei Codescheiben mit überlappenden Codespuren. Dargestellt sind ein Kreissegment der ersten Codescheibe 10 und die zweite Codescheibe 20 aus den oben beschriebenen Figuren. In die erste Codespur 11 der ersten Codescheibe 10 ist eine erste mittlere Umfangslinie 14 und in die zweite Codespur 21 der zweiten Codescheibe 20 eine zweite mittlere Umfangslinie 24 eingezeichnet. Die erste mittlere Umfangslinie 14 und die zweite mittlere Umfangslinie 24 schneiden sich im Punkt K. Die erste Codescheibe 10 ist so zur zweiten Codescheibe 20 angeordnet, dass ein Dreieck, das vom Mittelpunkt der Welle 12 der ersten Codescheibe 10, dem Mittelpunkt der zweiten Codescheibe 20 und dem Punkt K gebildet wird, bei Punkt K einen rechten Winkel W aufweist.

Das zweite Abtastfenster 23, in dem die überlappende Abtastung der zweiten Codespur 21 erfolgt, besteht in diesem Beispiel aus einem Ringsegment der zweiten Codespur 20, das den Punkt K enthält und sich vollständig im Bereich der Überlappung der ersten Codespur 11 und der zweiten Codespur 21 befindet. Je nach Aufbau der zweiten Codespur 21 kann das Abtastfenster 23 auch kleiner oder größer gewählt werden. Handelt es sich bei der zweiten Codespur 21 beispielsweise um eine Inkrementalspur, so kann ein kleineres zweites Abtastfenster 23 für die Abtastung ausreichend sein. Besteht die zweite Codespur 21 dagegen aus einem Pseudo-Random-Code mit Manchester-Codierung, so kann für die Abtastung ein größeres zweites Abtastfenster 23 erforderlich sein, da gegebenenfalls mehr aufeinander folgende Codesegmente erfasst werden müssen, als im Bereich der Überlappung enthalten sind. In diesem Fall wird die zweite Codespur 21 nur teilweise überlappend abgetastet.

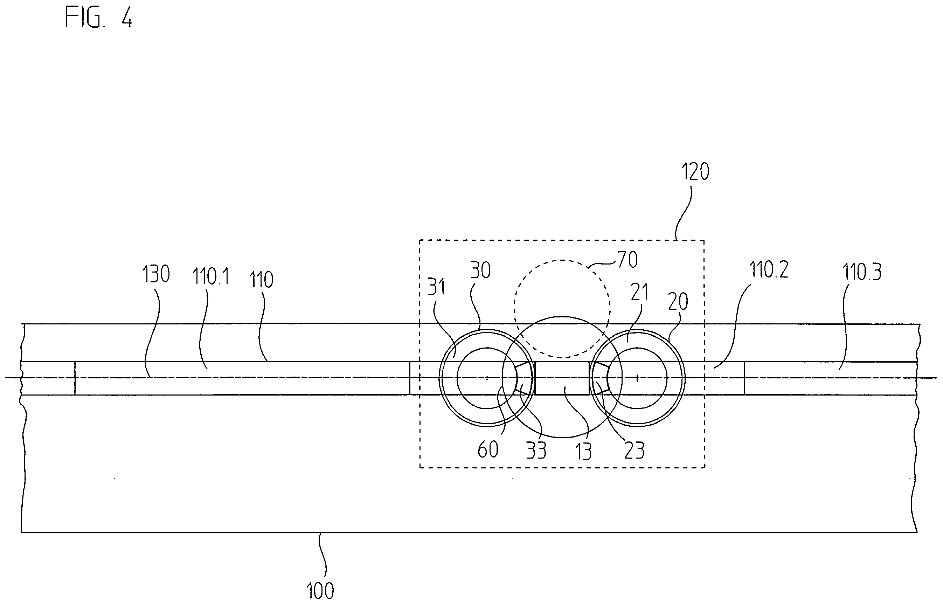

In den bisher beschriebenen Figuren wird die erste Maßverkörperung stets durch die erste Codescheibe 10 gebildet. Figur 4 zeigt dagegen eine schematische Darstellung eines weiteren Ausführungsbeispiels einer erfindungsgemäßen Positionsmesseinrichtung, bei der die erste Maßverkörperung ein Maßstab 100 ist. Bereits in den vorherigen Ausführungsbeispielen beschriebene Komponenten tragen das gleiche Bezugszeichen und werden nicht mehr detailliert beschrieben. Aus Gründen der Übersichtlichkeit wurde auf die Darstellung der Abtasteinheit 66, bestehend aus Beleuchtungseinheit 61 und Detektoreinheit 62, verzichtet. Statt dessen wird die Abtasteinheit 66 durch den Beleuchtungskreis 60 repräsentiert.

Auf dem Maßstab 100 ist eine erste Codespur 110 aufgebracht, die in mehrere Codeabschnitte 110.1, 110.2, 110.3 unterteilt ist, in denen sich die Codierung der ersten Codespur 110 in Messrichtung wiederholt. In dieser Ausführungsform kann der Maßstab 100 beispielsweise mit einem ersten Objekt verbunden sein, während die Abtasteinheit, die zweite Codescheibe 20 und die dritte Codescheibe 30 in einem Abtastkopf 120 integriert sind, der zur Messung des Verfahrweges bezogen auf den Maßstab 100 mit einem zweiten Objekt verbunden ist. Durch die vierte Codescheibe 70 ist angedeutet, dass der Abtastkopf 120 noch weitere Codescheiben enthalten kann, die nicht überlappend abgetastet werden. Bei dem ersten Objekt kann es sich beispielsweise um den Bearbeitungstisch einer Werkzeugmaschine, bei dem zweiten Objekt um einen Werkzeugschlitten handeln.

Die zweite Codescheibe 20 und die dritte Codescheibe 30 werden, wenn der Abtastkopf 120 in Messrichtung am Maßstab 100 entlang verfahren wird, vom Maßstab 100 über ein Untersetzungsgetriebe so angetrieben, dass sie die Anzahl der Codeabschnitte 110.1, 110.2, 110.3 zählen, die der Abtastkopf 120 passiert. Die Absolutposition kann dann aus dem zurückgelegten Weg innerhalb des Codeabschnitts 110.1, 110.2, 110.3, in dem sich der Abtastkopf 120 befindet, und der Anzahl der passierten Codeabschnitte 110.1, 110.2, 110.3 errechnet werden. Für den Antrieb des Getriebes kann am Maßstab 100 in Messrichtung beispielsweise eine Zahnung angeformt sein.

Auch in dieser Ausführungsform können die zweite Codescheibe 20 und die dritte Codescheibe 30 gegenüber dem Maßstab so angeordnet werden, dass sich die wenigstens eine Codespur des Maßstabs und die zweite Codespur 21, bzw. die dritte Codespur 31 der zweiten Codescheibe 20, bzw. der dritten Codescheibe 30 überlappen. Dadurch ergeben sich die gleichen Vorteile, wie sie bei den vorhergehenden Beispielen beschrieben wurden. Besonders vorteilhafte Überlappungsbereiche ergeben sich in dieser Ausführungsform, wenn die Mittelpunke der überlappend abgetasteten Codescheiben 20, 30 auf einer Mittellinie 130 der ersten Codespur 110 liegen.

Die vorliegende Erfindung ist nicht auf Durchlichtabtastung beschränkt, sondern ist auch für Auflichtabtastung geeignet. Bei der Auflichtabtastung befinden sich Beleuchtungseinheit und Detektoreinheit auf einer Seite der Maßverkörperungen und die abzutastenden Codespuren bestehen aus reflektierenden und nicht reflektierenden Codesegmenten. Licht, das von einer Beleuchtungseinheit in Richtung der Maßverkörperungen ausgesendet wird, wird von den reflektierenden Codesegmenten der Codespuren in Richtung der Detektoreinheit abgelenkt. Um eine überlappende Abtastung zu ermöglichen, ist es notwendig, dass überlappende Codespuren so ausgeführt werden, dass sie einen Teil des von der Beleuchtungseinheit ausgesendeten Lichts durchlassen. Das kann beispielsweise dadurch erreicht werden, dass die nicht reflektierenden Codesegmente der überlappenden Codespuren lichtdurchlässig oder/und die reflektierenden Codesegmente teilweise lichtdurchlässig ausgeführt sind.

Anstelle der beschriebenen optischen Abtastprinzipien können bei der vorliegenden Erfindung auch magnetische oder induktive Abtastprinzipien zum Einsatz kommen.

## Patentansprüche

1. Positionsmesseinrichtung zur Messung von Längen- und/oder Winkelpositionen, mit
- wenigstens zwei Maßverkörperungen (10, 20, 30, 100), auf denen je wenigstens eine Codespur (11, 21, 31, 110) aufgebracht ist,
- einer Abtasteinheit (66) zum Abtasten der Codespuren (11, 21, 31, 110),
**dadurch gekennzeichnet, dass**
die wenigstens zwei Maßverkörperungen (10, 20, 30, 100) so zueinander angeordnet sind, dass sich wenigstens eine Codespur (11, 110) einer ersten Maßverkörperung (10, 100) und wenigstens eine Codespur (21, 31) einer zweiten Maßverkörperung (20, 30) zumindest teilweise überlappen und von der Abtasteinheit (66) die Positionsinformation wenigstens einer der Codespuren (11, 21, 31, 110) im Bereich der Überlappung abtastbar ist.

2. Positionsmesseinrichtung nach Anspruch 1, **dadurch gekennzeichnet, dass** die erste Maßverkörperung (10, 100) eine erste Codescheibe (10) mit einer ersten Codespur (11) ist, mit der die Winkelposition einer Welle (12) messbar ist, und die zweite Maßverkörperung (20, 30) eine zweite Codescheibe (20) mit einer zweiten Codespur (21) ist, mit der die Anzahl der zurückgelegten Umdrehungen der Welle (12) messbar ist.

3. Positionsmesseinrichtung nach Anspruch 2, **dadurch gekennzeichnet, dass** eine weitere zweite Maßverkörperung (20, 30) in Form einer dritten Codescheibe (30) mit einer dritten Codespur (31) vorgesehen ist und die Anzahl der zurückgelegten Umdrehungen der Welle (12) durch Kombination der Winkelpositionen der zweiten Codescheibe (20) und der dritten Codescheibe (30) ermittelbar ist.

4. Positionsmesseinrichtung nach Anspruch 3, **dadurch gekennzeichnet, dass** die zweite Codescheibe (20) und die dritte Codescheibe (30) in einer Ebene angeordnet sind.

5. Positionsmesseinrichtung nach Anspruch 1, **dadurch gekennzeichnet, dass** die erste Maßverkörperung (10, 100) ein Maßstab (100) mit einer ersten Codespur (110) ist, die in Messrichtung aufeinander folgende, absolut codierte Codeabschnitte (110.1, 110.2, 110.3) aufweist und die zweite Maßverkörperung (20, 30) eine zweite Codescheibe (20) mit einer zweiten Codespur (21) ist, mit der die Anzahl der von einem Abtastkopf (120) passierten Codeabschnitte (110.1, 110.2, 110.3) messbar ist.

6. Positionsmesseinrichtung nach Anspruch 5, **dadurch gekennzeichnet, dass** eine weitere zweite Maßverkörperung (20, 30) in Form einer dritten Codescheibe (30) mit einer dritten Codespur (31) vorgesehen ist und die Anzahl der vom Abtastkopf passierten Codeabschnitte (110.1, 110.2, 110.3) durch Kombination der Winkelpositionen der zweiten Codescheibe (20) und der dritten Codescheibe (30) ermittelbar ist.

7. Positionsmesseinrichtung nach Anspruch 6, **dadurch gekennzeichnet, dass** die zweite Codescheibe (20) und die dritte Codescheibe (30) in einer Ebene angeordnet sind.

8. Positionsmesseinrichtung nach einem der vorhergehenden Ansprüche, **dadurch gekennzeichnet, dass** die Abtasteinheit (66) aus einer Beleuchtungseinheit (61) und einer Detektoreinheit (62) besteht.

9. Positionsmesseinrichtung nach Anspruch 8, **dadurch gekennzeichnet, dass** die Detektoreinheit (62) ein Opto-ASIC ist.

10. Positionsmesseinrichtung nach einem der vorhergehenden Ansprüche, **dadurch gekennzeichnet, dass** die überlappende Codespur (11, 110) eine Absolutcodierung in Form eines Pseudo-Random-Codes aufweist.

11. Positionsmesseinrichtung nach einem der vorhergehenden Ansprüche, **dadurch gekennzeichnet, dass** die überlappend abgetastete Codespur (21, 31) eine Absolutcodierung in Form eines Pseudo-Random-Codes aufweist.

12. Positionsmesseinrichtung nach einem der Ansprüche 10 oder 11, **dadurch gekennzeichnet, dass** der Pseudo-Random-Code eine Manchester-Codierung aufweist.

13. Positionsmesseinrichtung nach einem der vorhergehenden Ansprüche, **dadurch gekennzeichnet, dass** die erste Maßverkörperung (10, 100) relativ zur zweiten Maßverkörperung (20, 30) so angeordnet ist, dass in Bereichen überlappender Abtastung (23, 33) die Codesegmente (25) der überlappend abgetasteten Codespur (21, 31) eine möglichst große Anzahl von Codesegmenten (15) der überlappenden Codespur (11, 110) schneiden.

## Claims

1. Position measuring device for measuring length and/or angle positions, comprising
- at least two material measures (10, 20, 30, 100), on which at least one code track (11, 21, 31, 110) has been applied in each case,
- a scanning unit (66) for scanning the code tracks (11, 21, 31, 110),
**characterized in that**
the at least two material measures (10, 20, 30, 100) are arranged in relation to one another in such a way that at least one code track (11, 110) of a first material measure (10, 100) and at least one code track (21, 31) of a second material measure (20, 30) overlap at least in part and the position information of at least one of the code tracks (11, 21, 31 110) is scannable by the scanning unit (66) in the region of the overlap.

2. Position measuring device according to Claim 1, **characterized in that** the first material measure (10, 100) is a first code disc (10) with a first code track (11), by means of which the angle position of a shaft (12) is measurable, and the second material measure (20, 30) is a second code disc (20) with a second code track (21), by means of which the number of rotations covered by the shaft (12) is measurable.

3. Position measuring device according to Claim 2, **characterized in that** a further second material measure (20, 30) in the form of a third code disc (30) with a third code track (31) is provided and the number of rotations covered by the shaft (20) is ascertainable by combining the angle positions of the second code disc (20) and the third code disc (30).

4. Position measuring device according to Claim 3, **characterized in that** the second code disc (20) and the third code disc (30) are arranged in one plane.

5. Position measuring device according to Claim 1, **characterized in that** the first material measure (10, 100) is a scale (100) with a first code track (110) which has code portions (110.1, 110.2, 110.3) encoded in absolute terms and following one another in the measuring direction and the second material measure (20, 30) is a second code disc (20) with a second code track (21), by means of which the number of code portions (110.1, 110.2, 110.3) passed by the scanning head (120) is measurable.

6. Position measuring device according to Claim 5, **characterized in that** a further second material measure (20, 30) is provided in the form of a third code disc (30) with a third code track (31) and the number of code portions (110.1, 110.2, 110.3) passed by the scanning head is ascertainable by combining the angle positions of the second code disc (20) and the third code disc (30).

7. Position measuring device according to Claim 6, **characterized in that** the second code disc (20) and the third code disc (30) are arranged in one plane.

8. Position measuring device according to one of the preceding claims, **characterized in that** the scanning unit (66) consists of an illumination unit (61) and a detector unit (62).

9. Position measuring device according to Claim 8, **characterized in that** the detector unit (62) is an opto-ASIC.

10. Position measuring device according to one of the preceding claims, **characterized in that** the overlapping code track (11, 110) has absolute encoding in the form of a pseudo-random code.

11. Position measuring device according to one of the preceding claims, **characterized in that** the code track (21, 31) scanned in an overlapping manner has absolute encoding in the form of a pseudo-random code.

12. Position measuring device according to either of Claims 10 and 11, **characterized in that** the pseudo-random code has Manchester encoding.

13. Position measuring device according to one of the preceding claims, **characterized in that** the first material measure (10, 100) is arranged relative to the second material measure (20, 30) in such a way that, in the regions of overlapping scanning (23, 33), the code segments (25) of the code track (21, 31) scanned in an overlapping manner intersect with the greatest possible number of code segments (15) of the overlapping code track (11, 110).

## Revendications

1. Dispositif de mesure de position destiné à mesurer des positions longitudinales et/ou angulaires, comprenant
- au moins deux étalons (10, 20, 30, 100) sur lesquels est respectivement appliquée au moins une piste de codage (11, 21, 31, 110),
- une unité de palpage (66) destinée à palper les pistes de codage (11, 21, 31, 110),
**caractérisé en ce que**
les au moins deux étalons (10, 20, 30, 100) sont disposés l'un par rapport à l'autre de telle sorte qu'au moins une piste de codage (11, 110) d'un premier étalon (10, 100) et au moins une piste de codage (21, 31) d'un deuxième étalon (20, 30) se chevauchent au moins partiellement et l'information de position d'au moins l'une des pistes de codage (11, 21, 31, 110) dans la zone du chevauchement peut être palpée par l'unité de palpage (66).

2. Dispositif de mesure de position selon la revendication 1, **caractérisé en ce que** le premier étalon (10, 100) est un premier disque de codage (10) pourvu d'une première piste de codage (11) avec lequel peut être mesurée la position angulaire d'un arbre (12), et le deuxième étalon (20, 30) est un deuxième disque de codage (20) pourvu d'une deuxième piste de codage (21) avec lequel peut être mesuré le nombre de tours accomplis de l'arbre (12).

3. Dispositif de mesure de position selon la revendication 2, **caractérisé en ce qu'**il existe un deuxième étalon (20, 30) supplémentaire sous la forme d'un troisième disque de codage (30) pourvu d'une troisième piste de codage (31) et le nombre de tours accomplis de l'arbre (12) peut être déterminé par une combinaison des positions angulaires du deuxième disque de codage (20) et du troisième disque de codage (30).

4. Dispositif de mesure de position selon la revendication 3, **caractérisé en ce que** le deuxième disque de codage (20) et le troisième disque de codage (30) sont disposés dans un plan.

5. Dispositif de mesure de position selon la revendication 1, **caractérisé en ce que** le premier étalon (10, 100) est un étalon (100) pourvu d'une première piste de codage (110) qui possède des portions de code (110.1, 110.2, 110.3) à codage absolu successives dans le sens de la mesure, et le deuxième étalon (20, 30) est un deuxième disque de codage (20) pourvu d'une deuxième piste de codage (21) avec lequel peut être mesuré le nombre de portions de code (110.1, 110.2, 110.3) devant lesquelles passe une tête de palpage (120).

6. Dispositif de mesure de position selon la revendication 5, **caractérisé en ce qu'**il existe un deuxième étalon (20, 30) supplémentaire sous la forme d'un troisième disque de codage (30) pourvu d'une troisième piste de codage (31) et le nombre de portions de code (110.1, 110.2, 110.3) devant lesquelles passe la tête de palpage (120) peut être déterminé par une combinaison des positions angulaires du deuxième disque de codage (20) et du troisième disque de codage (30).

7. Dispositif de mesure de position selon la revendication 6, **caractérisé en ce que** le deuxième disque de codage (20) et le troisième disque de codage (30) sont disposés dans un plan.

8. Dispositif de mesure de position selon l'une des revendications précédentes, **caractérisé en ce que** l'unité de palpage (66) se compose d'une unité d'éclairage (61) et d'une unité de détection (62).

9. Dispositif de mesure de position selon la revendication 8, **caractérisé en ce que** l'unité de détection (62) est un opto-ASIC.

10. Dispositif de mesure de position selon l'une des revendications précédentes, **caractérisé en ce que** la piste de codage (11, 110) chevauchante présente un codage absolu sous la forme d'un code pseudo-aléatoire.

11. Dispositif de mesure de position selon l'une des revendications précédentes, **caractérisé en ce que** la piste de codage (21, 31) palpée en chevauchement présente un codage absolu sous la forme d'un code pseudo-aléatoire.

12. Dispositif de mesure de position selon l'une des revendications 10 ou 11, **caractérisé en ce que** le code pseudo-aléatoire est un codage Manchester.

13. Dispositif de mesure de position selon l'une des revendications précédentes, **caractérisé en ce que** le premier étalon (10, 100) est disposé de telle sorte par rapport au deuxième étalon (20, 30) que dans les zones du palpage en chevauchement (23, 33), les segments de code (25) de la piste de codage (21, 31) palpée en chevauchement croisent un nombre aussi grand que possible de segments de code (15) de la piste de codage (11, 110) chevauchante.
